(19) Europäisches Patentamt
European Patent Office
Office européen des brevets

(11) EP 2 743 157 A1

(12) **EUROPÄISCHE PATENTANMELDUNG**

(43) Veröffentlichungstag:
18.06.2014 Patentblatt 2014/25

(51) Int Cl.:
*B62D 5/04* (2006.01)     *F16H 25/22* (2006.01)

(21) Anmeldenummer: 13196801.8

(22) Anmeldetag: 12.12.2013

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **14.12.2012   DE 102012024416**

(71) Anmelder: **ThyssenKrupp Presta AG
9492 Eschen (LI)**

(72) Erfinder:
• **Kiforiuk, Alexander
73061 Ebersbach an der Fils (DE)**
• **Kontner, Dennis
73033 Göppingen (DE)**
• **Birkwald, Frank
73760 Ostfildern (DE)**

(74) Vertreter: **Lenzing Gerber Stute
Partnerschaft von Patentanwälten
Bahnstraße 9
40212 Düsseldorf (DE)**

(54) **Kugelgewinde mit Mittenüberhöhung**

(57)    Die Erfindung betrifft eine Servolenkung mit einem Kugelgewindetrieb, aufweisend eine Gewindespindel (10) und eine Kugelmutter, die über in jeweiligen Gewinden angeordnete Kugeln (14) miteinander beweglich verbunden sind. Ein Flankendurchmesser des Gewindes (11) der Gewindespindel (10) ist über die Länge der Gewindespindel (10) veränderlich ausgebildet.

Fig. 1

EP 2 743 157 A1

**Beschreibung**

Die vorliegende Erfindung betrifft eine Servolenkung mit einem Kugelgewindetrieb nach dem Oberbegriff des unabhängigen Anspruchs 1.

Zur Unterstützung des Lenkens eines Kraftfahrzeugs kann vorgesehen sein, dem Lenksystem eine Hilfskraftunterstützung zuzuordnen. Solche Lenkeinrichtungen werden als elektrische bzw. elektrisch angetriebene Servolenkungen (EPAS = Electric Power Assisted Steering) bezeichnet. Bei Servolenkungen mit einem Kugelgewindetriebe umfasst dieser wenigstens eine Gewindespindel, auf der eine Kugelmutter angeordnet ist. Gewindespindel und Kugelmutter weisen jeweils ein Gewinde auf, die im Wesentlichen einen Teilkreis beschreiben. In dem Gewinde sind eine Vielzahl Kugeln vorgesehen, über die die Gewindespindel und die Kugelmutter mechanisch gekoppelt sind. Durch Verdrehen der Kugelmutter kann die Gewindestange seitlich verschoben werden. Die Verdrehung der Kugelmutter wird über eine Lenkbewegung eines Fahrers in dem Fahrzeug initiiert.

Der Kugelgewindetrieb ist für gewöhnlich im Betrieb mechanischen Belastungen ausgesetzt, was zu störenden Klappergeräuschen führen kann. Es werden üblicherweise hierfür Maßnahmen getroffen, die Geräusche auf ein Minimum zu reduzieren. Vor allem wird bei Kugelgewindetrieben die Gewindespindel vorgespannt, was jedoch negative Auswirkungen auf die Lebensdauer und die Lenkungshaptik haben kann. Zudem führt diese Verspannung zu unregelmäßigen Verschleiß. Durch die Verspannung kann die Gewindespindel verbogen, deachsiert oder schräggestellt werden, wodurch die Gewindespindel an die Bauteilen, vor allem an die Kugelmutter, gedrängt wird, wo die Klappergeräusche auftreten.

Um diese Nachteile auszuschließen ist es eine Aufgabe der vorliegenden Erfindung, die eingangs genannte Servolenkung weiterzuentwickeln, bei der die Gewindespindel nicht deachsiert, verbogen oder schräggestellt zu werden braucht.

Eine Servolenkung zur Lösung der erfinderischen Aufgabe weist die Merkmale des unabhängigen Anspruchs 1 auf. Danach wird eine Servolenkung bereitgestellt mit einem Kugelgewindetrieb, aufweisend eine Gewindespindel und eine darauf beweglich angeordnete Kugelmutter, wobei die Gewindespindel und die Kugelmutter jeweils ein Gewinde aufweisen zur teilweisen Aufnahme von Kugeln, die die Gewindespindel mit der Kugelmutter verbinden, wobei das Gewinde über eine Länge der Gewindespindel eine variable Höhe aufweist. Durch die variable Höhe des Gewindes stehen die Kugeln unterschiedlich hoch aus dem Gewinde hervor, wodurch eine Variation des zwischen der Gewindespindel und der Kugelmutter anliegenden Spiels hervorgerufen wird. Mit dem über die Länge der Gewindespindel anliegenden variablen Spiel können die Klappergeräusche für bestimmte Lenkstellungen vermieden werden.

Gemäß eines bevorzugten Ausführungsbeispiels kann es vorgesehen sein, dass die Höhe des Gewindes in einer Mitte der Gewindespindel, die einer Neutralstellung der Servolenkung entspricht, niedriger ist, als in Endbereichen des Gewindes, wobei die Höhe in den Endbereichen von der Mitte zu jeweiligen Enden der Gewindespindel sukzessive veränderlich ist, insbesondere zunimmt. Die Neutralstellung der Servolenkung entspricht einer Geradeausfahrt eines Kraftfahrzeug, in der die Servolenkung verbaut ist. Damit stehen die gelenkten Räder im Wesentlichen in einer Längsrichtung des Kraftfahrzeugs. In dieser Neutralstellung ist die Belastung des Kugelgewindetriebs am Geringsten, weshalb auch in dieser Stellung das geringste Spiel vorgesehen sein kann. Bei einem vollem Lenkeinschlag, wenn also die Kugelmutter an dem einen oder dem anderen Ende der Gewindespindel positioniert ist, ist eine hohe Belastung zu erwarten, weshalb hier ein größeres Spiel vorliegen kann.

Nach einer weiteren vorteilhaften Ausgestaltung kann die Höhe des Gewindes an den Enden der Gewindespindel in etwa einem halben Kugeldurchmesser entsprechen. Die Enden mit dem halben Kugeldurchmesser entsprechen dabei einer bei Kugelgewindetrieben üblichen Gewindegröße.

Weiterhin kann vorgesehen sein, wenn das Gewinde der Gewindespindel derart ausgebildet ist, dass die Kugeln insbesondere an den Enden in etwa zur Hälfte in dem Gewinde angeordnet sind und in der Mitte mit weniger als der Hälfte ihres Kugelvolumens in dem Gewinde angeordnet sind. Durch die Anordnung der Kugeln in der Mitte mit weniger als der Hälfte ihres Kugelvolumens stehen die Kugeln höher aus dem Gewinde hervor, als an den Enden, so dass das Spiel zwischen Gewindestange und Kugelmutter in der Mitte der Gewindespindel kleiner als an den Enden ist.

Gemäß einer Weiterbildung der Erfindung kann die Mitte des Gewindes der Gewindespindel wenigstens einem Gewindeumlauf, vorzugsweise einer Länge des korrespondierenden Gewindes der Kugelmutter entsprechen und die Endbereiche sich zwischen der Mitte und den jeweiligen Enden erstrecken. Das Gewinde ist spiegelbildlich aufgebaut, wobei die Mitte des Gewindes mit einer gleichen Gewindehöhe sich über mehrere Gewindeumläufe erstrecken kann, was vorzugsweise der Länge der Kugelmutter entspricht. Dadurch werden alle Kugeln in der Mitte gleichmäßig in den jeweiligen Gewinden gehalten, weshalb das Spiel über die gesamte Länge der Kugelmutter gleich groß ist.

Weiterhin kann nach einer weiteren Ausführungsform vorgesehen sein, dass zu den jeweiligen Enden der Gewindespindel die Gewindehöhe zunimmt. Dadurch wird das Spiel über den Verlauf der Gewindespindel zu den Enden im Gegensatz zur Mitte erhöht, wodurch sich der Verschleiß in diesem Bereich reduzieren lässt.

Damit die Klappergeräusche möglichst ganz vermieden werden können, kann vorgesehen sein, dass ein minimales Spiel zwischen Gewindespindel und der Kugelmutter in der Mitte der Gewindespindel Null entspricht. Wenn kein Spiel zwischen den Bauteilen vorgesehen ist, können diese auch nicht bei Belastungen gegeneinander schlagen,

EP 2 743 157 A1

weshalb keine Geräusche auftreten.

Ebenfalls kann nach einem erfinderischen Aspekt vorgesehen sein, wenn ein maximales Spiel in der Mitte der Gewindespindel größer als ein minimales Spiel in den Endbereichen ist. Damit ist gewährleistet, dass auch in den Endbereichen nur ein sehr kleines Spiel auftreten kann. Das Spiel über die Gesamtlänge der Gewindespindel sowie das Spiel an jedem einzelnen Abschnitt der Gewindespindel kann variieren, weshalb auch das Spiel in der Mitte zwischen einem Minimum und einem Maximum liegt. Das Spiel jedes einzelnen Abschnitts ist indes derart gewählt, dass es sich in engen Grenzen befindet, wodurch das maximale Spiel in der Mitte ein minimales Spiel in den Endbereichen nicht überschreitet.

Die Servolenkung kann derart beschaffen sein, dass eine Differenz zwischen dem minimalen und dem maximalen Spiel in dem Bereich der Mitte kleiner ist als in den Endbereichen. Insbesondere bei einer Geradeausfahrt, die die häufigste Fahrweise eines Kraftfahrzeugs ist, sollen die Klappergeräusche auf ein Minimum reduziert werden, weshalb das Spiel in der Mitte engeren Grenzen gesetzt ist, als in den Endbereichen, wo darüber hinaus auch die Belastung größer ist und somit auch eine Gefahr einer Schädigung minimiert werden kann.

Gemäß einer vorteilhaften Ausbildung der Erfindung, kann der Steigungswinkel des Gewindes über die Länge der Gewindespindel veränderlich sein, insbesondere an den Enden größer sein als in der Mitte. Mit Zunahme des Gewindedurchmessers erfolgt auch eine Vergrößerung des Steigungswinkels, der sukzessive von der Mitte zu den Enden erfolgt.

Nach einer weiteren bevorzugten Ausführungsform kann vorgesehen sein, dass ein Flankenwinkel über die Länge der Gewindespindel veränderlich ist, insbesondere an den Enden kleiner als in der Mitte ist. Durch den Flankenwinkel kann eine Abwälzbahn von Kugeln des Kugelgewindetriebs auf der Gewindespindel beschrieben werden, wobei bei einem großen Winkel die Kugeln weiter aus der Kugelbahn hervorstehen, als bei einem kleineren Winkel.

Weitere vorteilhafte Ausgestaltungen der Erfindung sind Teile der Unteransprüche.

Nachfolgend wird ein bevorzugtes Ausführungsbeispiel anhand der Zeichnung näher erläutert. In dieser zeigen:

Fig. 1     eine seitliche Ansicht auf eine Gewindespindel

Fig. 2     ein Überrolldiagramm nach der Gewindespindel nach Fig. 1 mit Bereichen unterschiedlichen Spiels und

Fig. 3     schematische Darstellung unterschiedlicher Teilkreise der Gewindespindel.

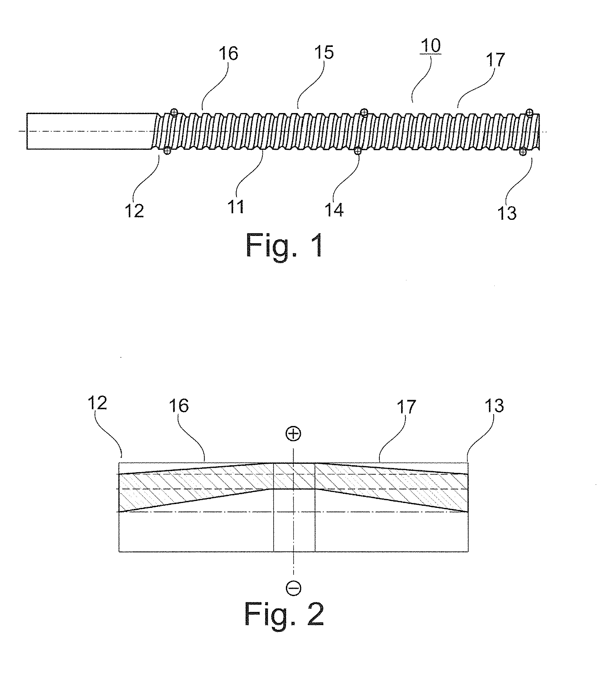

Eine Gewindespindel 10 ist in der Fig. 1 dargestellt mit einem auf den ersten Blick üblichen Gewinde 11 (entspricht einem Gewindegang), welches von einem ersten Ende 12 zu einem zweiten Ende 13 verläuft. Die Gewindespindel 10 ist Teil eines Kugelgewindetriebs, der beispielsweise in einer Servolenkung verbaut werden kann. Nicht in der Fig. 1 dargestellt ist eine Kugelmutter, die auf der Gewindespindel 10 für gewöhnlich angeordnet ist und die auch ein Gewinde aufweist, welches mit dem Gewinde 11 der Gewindespindel 10 korrespondiert. Die beiden Gewinde 11 sind zur Aufnahme von Kugeln 14 ausgebildet, weshalb sie eine im Wesentlichen teilkreisförmige Form aufweisen.

Das Gewinde 11 mit der teilkreisförmigen Form variiert über die Länge der Gewindespindel 10, nämlich derart, dass die Enden 12, 13 eine andere Gewindehöhe aufweisen, als das Gewinde 11 in etwa der Mitte 15 der Gewindespindel 10. Es ist vorgesehen, dass die Mitte 15 mit einer Gewindehöhe versehen ist, die kleiner ist als die Gewindehöhe an den beiden Enden 12, 13. Durch die kleinere Gewindehöhe in der Mitte, stehen die Kugeln weiter aus dem Gewinde hervor, weshalb ein zwischen der Gewindespindel und der Kugelmutter vorgesehenes minimales Spiel kleiner als an den Enden 12, 13 ist. Hierdurch können durch das Spiel auftretende Klappergeräusche reduziert werden.

Die Gewindehöhe ist definiert als die Differenz zwischen einem Nenndurchmesser, also einem Außendurchmesser, und einem Kerndurchmesser. Mit anderen Worten ist die Differenz gebildet aus dem Außendurchmesser der Außenumfangsfläche der Gewindespindel 10 und einem Gewindetiefsten des Gewindes 11. Durch die variable Gewindehöhe variiert auch ein Flankenwinkel β. Der Flankenwinkel β kann als Maß einer Abwälzbahn der Kugeln 14 definiert werden, wobei durch einen unterschiedliche Flankenwinkel β die Kugeln unterschiedlich weit aus der Gewindespindel 10 hervorstehen.

In der Mitte 15 weist demnach die Gewindespindel 10, die auch als Gewindestange oder Gewindezahnstange bezeichnet werden kann, eine Mittenüberhöhung auf. Die Mittenüberhöhung bezieht sich auf die Gewindespindel 10, die bei diesem Ausführungsbeispiel in der Mitte 15 einen größeren Kerndurchmesser aufweist, als in den Enden 12, 13. Zwischen den Enden 12, 13 und der Mitte 15 erstrecken sich jeweils Abschnitte, die als Endbereiche 16, 17 bezeichnet sind. Die Endbereiche 16, 17 weisen ebenfalls eine größere Gewindehöhe als die Mitte 15 des Gewindes 11 auf. In den Endbereichen 16, 17 verjüngt sich der Kerndurchmesser der Gewindespindel 10 kontinuierlich von der Mitte 15 aus zu den Enden 12, 13, weshalb die Gewindehöhe in den Endbereichen 16, 17 variiert. Durch die Mittenüberhöhung stehen die Kugeln 14 weiter aus der Gewindespindel 10 hervor als in den Endbereichen 16, 17. Ein Durchmesser D einer Kugelbahn, der mittlere Abstand zweier sich um 180° gegenüberstehenden Kugeln, ist also in der Mitte um den Betrag der Mittenüberhöhung größer als in den Endbereichen 16, 17.

3

Die Mittenüberhöhung bzw. die Gewindehöhe ist in der Mitte 15 konstant ausgebildet. Dabei kann beispielsweise die niedrigste Gewindehöhe einer Länge von einem Gewindegangumlauf entsprechen. Bevorzugt ist aber, dass die Gewindehöhe über eine Länge konstant ist, die der Länge der Kugelmutter, insbesondere der Länge des korrespondierenden Gewindes der Kugelmutter, entspricht. Wenn beispielsweise die Kugelmutter ein Gewinde mit 4 oder 5 Gewindegangumläufen aufweist, entspricht die Länge der Mitte 15 mit konstanter Gewindehöhe ebenfalls einer Länge von 4 oder 5 Gewindegangumläufen. Damit ist sicher gestellt, dass in der Mitte 15 der Gewindespindel 10 das Spiel über die gesamte Länge der Kugelmutter gleich groß ist.

Das Spiel zwischen der Gewindespindel 10 und der Kugelmutter liegt in der Mitte 15 minimal bei Null und maximal bei einem Wert, der größer als ein minimales Spiel in den Endbereichen 16, 17 und den Enden 12, 13 ist. Das Spiel ist in dem Überrolldiagramm der Fig. 2 dargestellt. Das Überrolldiagramm zeigt das Spiel, welches in jedem Bereich zwischen der Gewindespindel aufgrund der unterschiedlichen Gewindehöhe und der nicht dargestellten Kugelmutter anliegt. Dabei stellt das Überrolldiagramm einen mittleren Messbereich dar, welcher in der Mittenposition auf 0 $\mu$m kalibriert wird. Der Bereich der Mitte 15 ist in der Fig. 2 mit Bereich I dargestellt, wohingegen die Endbereiche 16, 17 der Gewindespindel den Bereichen II entsprechen.

Es ist ebenfalls aus dem Überrolldiagramm ersichtlich, dass eine Differenz zwischen minimalen und maximalen Spiel in den Endbereichen 16, 17 von der Mitte 15 zu den Enden 12, 13 sukzessive zunimmt, weshalb bei der Geradeausfahrt die Differenz kleiner ist. Die Differenz ist bei einem maximalen Hub, wenn also die Kugelmutter an den Enden 12, 13 der Gewindespindel 10 anschlägt und eine maximaler Lenkeinschlag mit der Servolenkung verwirklicht wird, am Größten. In dem Überrolldiagramm wird der Lenkeinschlag der Servolenkung als Teil eines Funktionsbereichs bezeichnet, weshalb der Lenkeinschlag nach links und nach rechts jeweils als ein halber Funktionsbereich bezeichnet ist.

Durch die unterschiedliche Gewindehöhe über die Längserstreckung der Gewindespindel 10 variiert auch ein Steigungswinkel des Gewindes. Der Steigungswinkel $\alpha$ eines Gewindes wird üblicherweise mit dem Arkustangens *arctan* von Steigung/(Flankendurchmesser * Pi) berechnet. Die Steigung ist als Weg, der durch eine Umdrehung des Gewindegangs zurückgelegt wird definiert. Mit anderen Worten also als der Abstand zwischen zwei Gewindespitzen. Der Flankendurchmesser, der als Abstand zweier gegenüberliegender Gewindeflanken definiert wird, wird bei der Erfindung durch einen Teilkreis ersetzt. Der Teilkreis entspricht dem Umfang des teilkreisförmigen Gewindes 11.

(f1)

$$\alpha = \arctan (Steigung/(\pi * Teilkreis))$$

$$\alpha = \arctan (Steigung/(\pi * Teilkreis)) )$$

Durch den größeren Teilkreis in den Endbereichen ergibt sich dort auch ein größerer Steigungswinkel $\alpha 1$ als in der Mitte mit einem kleineren Steigungswinkel $\alpha 2$.

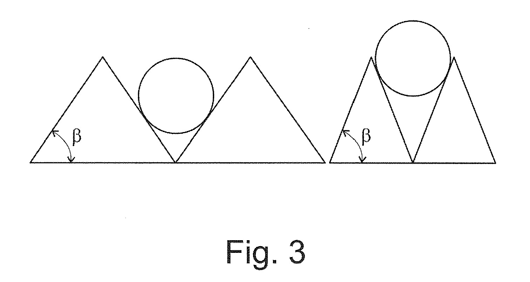

In der Figur 3 ist veranschaulicht, wie sich eine Änderung des Flankenwinkels $\beta$ über die Länge der Gewindespindel auswirkt. Der Flankenwinkel wird gemessen gegen die Längsachse der Gewindespindel. Wenn der Flankenwinkel vergrößert wird, vergrößert sich auch der Teilkreisdurchmesser des Gewindes. Dadurch wird das Spiel zwischen Kugelmutter und Gewindespindel verringert. Bei kleinerem Flankenwinkel wird das Spiel hingegen verringert. Ein erfindungsgemäßer Gewindetrieb kann also auch ohne Vergrößerung des Kerndurchmessers im Mittenbereich erhalten werden, wenn im Mittenbereich der Flankenwinkel $\beta$ gegenüber den Endbereichen vergrößert wird.

**Patentansprüche**

1.  Servolenkung mit einem Kugelgewindetrieb, aufweisend eine Gewindespindel (10) und eine darauf beweglich angeordnete Kugelmutter, wobei die Gewindespindel (10) und die Kugelmutter jeweils ein Gewinde (11) aufweisen zur teilweisen Aufnahme von Kugeln, die die Gewindespindel (10) mit der Kugelmutter verbinden, **dadurch gekennzeichnet, dass** das Gewinde (11) über eine Länge der Gewindespindel (10) eine variable Höhe aufweist.

2.  Servolenkung nach Anspruch 1, **dadurch gekennzeichnet, dass** die Höhe des Gewindes (11) in einer Mitte (15) der Gewindespindel (10), die einer Neutralstellung der Servolenkung entspricht, niedriger ist, als in Endbereichen (16, 17) des Gewindes (11), wobei die Höhe in den Endbereichen (16, 17) von der Mitte (15) zu jeweiligen Enden (12, 13) der Gewindespindel (10) sukzessive veränderlich ist, insbesondere zunimmt.

3.  Servolenkung nach Anspruch 1 oder 2, **dadurch gekennzeichnet, dass** die Höhe des Gewindes (11) an den Enden (12, 13) der Gewindespindel (10) in etwa einem halben Kugeldurchmesser entspricht.

4. Servolenkung nach wenigstens einem der vorstehenden Ansprüche, **dadurch gekennzeichnet, dass** das Gewinde (11) der Gewindespindel (10) derart ausgebildet ist, dass die Kugeln (14) insbesondere an den Enden (12, 13) in etwa zur Hälfte in dem Gewinde (11) angeordnet sind und in der Mitte (15) mit weniger als der Hälfte ihres Kugelvolumens in dem Gewinde (11) angeordnet sind.

5. Servolenkung nach wenigstens einem der vorstehenden Ansprüche, **dadurch gekennzeichnet, dass** die Mitte (15) des Gewindes (11) der Gewindespindel (10) wenigstens einem Gewindeumlauf, vorzugsweise einer Länge des korrespondierenden Gewindes der Kugelmutter entspricht und die Endbereiche (16, 17) sich zwischen der Mitte (15) und den jeweiligen Enden (12, 13) erstrecken.

6. Servolenkung nach wenigstens einem der vorstehenden Ansprüche, **dadurch gekennzeichnet, dass** ein minimales Spiel zwischen Gewindespindel (10) und der Kugelmutter in der Mitte (15) der Gewindespindel (10) Null entspricht.

7. Servolenkung nach wenigstens einem der vorstehenden Ansprüche, **dadurch gekennzeichnet, dass** ein maximales Spiel in der Mitte der Gewindespindel (10) größer als ein minimales Spiel in den Endbereichen (16, 17) ist.

8. Servolenkung nach wenigstens einem der vorstehenden Ansprüche, **dadurch gekennzeichnet, dass** eine Differenz zwischen dem minimalen und dem maximalen Spiel in dem Bereich der Mitte (15) kleiner ist als in den Endbereichen (16, 17).

9. Servolenkung nach wenigstens einem der vorstehenden Ansprüche, **dadurch gekennzeichnet, dass** ein Steigungswinkel ($\alpha$) des Gewindes (11) über die Länge der Gewindespindel (10) veränderlich ist, insbesondere an den Enden (12, 13) größer als in der Mitte (15) ist.

10. Servolenkung nach wenigstens einem der vorstehenden Ansprüche, **dadurch gekennzeichnet, dass** ein Flankenwinkel $\beta$ über die Länge der Gewindespindel (10) variiert, insbesondere an den Enden (12, 13) kleiner als in der Mitte (15) ist.

11. Servolenkung nach wenigstens einem der vorstehenden Ansprüche, **dadurch gekennzeichnet, dass** bei über die Länge des Gewindes konstantem Kern- und/oder Kopfdurchmesser mittels einer Variation des Flankenwinkels ß der Teilkreis variiert ist.

Fig. 1

Fig. 2

Fig. 3

EP 2 743 157 A1

**Nummer der Anmeldung**

EP 13 19 6801

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2005 172157 A (NSK LTD) 30. Juni 2005 (2005-06-30) * Zusammenfassung * * Abbildungen * * Absätze [0011] - [0021] * ----- | 1-11 | INV. B62D5/04 F16H25/22 |
| Y | DE 10 2012 204376 A1 (GM GLOBAL TECH OPERATIONS INC [US]) 27. September 2012 (2012-09-27) | 1,2,5-8 | |
| A | * Absätze [0010] - [0044] * * Abbildungen 1-4 * ----- | 3,4,9-11 | |
| Y | DE 953 579 C (DAIMLER BENZ AG) 6. Dezember 1956 (1956-12-06) | 1,2,5-8 | |
| A | * das ganze Dokument * ----- | 3,4,9-11 | |
| A | DE 10 2008 046119 A1 (VOLKSWAGEN AG [DE]) 11. März 2010 (2010-03-11) * das ganze Dokument * ----- | 1-11 | |
| A | US 5 373 754 A (TAKEI SEIJI [JP]) 20. Dezember 1994 (1994-12-20) * Spalte 2, Zeile 16 - Spalte 3, Zeile 21 * * Abbildungen 3-5 * ----- | 1-11 | RECHERCHIERTE SACHGEBIETE (IPC) B62D F16H |
| A | DE 10 43 004 B (GEN MOTORS CORP) 6. November 1958 (1958-11-06) * das ganze Dokument * ----- | 1-11 | |

Der vorliegende Recherchenbericht wurde für alle Patentansprüche erstellt

| Recherchenort | Abschlußdatum der Recherche | Prüfer |
|---|---|---|
| Den Haag | 19. März 2014 | Ionescu, Bogdan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................
& : Mitglied der gleichen Patentfamilie, übereinstimmendes Dokument

EPO FORM 1503 03.82 (P04C03)

# EP 2 743 157 A1

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-03-2014

| Im Recherchenbericht angeführtes Patentdokument | Datum der Veröffentlichung | Mitglied(er) der Patentfamilie | Datum der Veröffentlichung |
|---|---|---|---|
| JP 2005172157 A | 30-06-2005 | KEINE | |
| DE 102012204376 A1 | 27-09-2012 | BR 102012006479 A2<br>CN 102689650 A<br>DE 102012204376 A1<br>US 2012241243 A1 | 05-11-2013<br>26-09-2012<br>27-09-2012<br>27-09-2012 |
| DE 953579 C | 06-12-1956 | DE 953579 C<br>FR 1141723 A<br>GB 790962 A | 06-12-1956<br>06-09-1957<br>19-02-1958 |
| DE 102008046119 A1 | 11-03-2010 | KEINE | |
| US 5373754 A | 20-12-1994 | JP H0614607 U<br>US 5373754 A | 25-02-1994<br>20-12-1994 |
| DE 1043004 B | 06-11-1958 | DE 1043004 B<br>FR 1155762 A<br>GB 792894 A<br>US 2779206 A | 06-11-1958<br>08-05-1958<br>02-04-1958<br>29-01-1957 |

EPO FORM P0461

Für nähere Einzelheiten zu diesem Anhang : siehe Amtsblatt des Europäischen Patentamts, Nr.12/82